# EUROPÄISCHE PATENTSCHRIFT

(11) **EP 1 212 266 B1**
(45) Veröffentlichungstag und Bekanntmachung des Hinweises auf die Patenterteilung: **10.12.2003**
(21) Anmeldenummer: 00966015.0
(22) Anmeldetag: 14.09.2000
(51) Int. Cl.: C04B 40/06, C04B 26/02, E01C 5/06, E04C 2/04

(54) **MEHRSCHICHTVERBUNDMATERIAL AUS ZEMENTGEBUNDENEM BETON UND POLYMERGEBUNDENEM BETON UND VERFAHREN ZU SEINER HERSTELLUNG**
MULTIPLE LAYER COMPOSITE MATERIAL CONSISTING OF CEMENT-BOUND CONCRETE AND POLYMER-BOUND CONCRETE AND METHOD FOR PRODUCING THE SAME
MATERIAU COMPOSITE MULTICOUCHE EN BETON-CIMENT ET EN BETON-POLYMERE ET SON PROCEDE DE PRODUCTION

(30) Priorität: 15.09.1999 DE 19944307
(43) Veröffentlichungstag der Anmeldung: 12.06.2002
(73) Patentinhaber: UNI-International Bausysteme GmbH & Co., D-76473 Iffezheim (DE)
(72) Erfinder: SCHMITZ, Michael, 77836 Rheinmünster (DE)
(74) Vertreter: Klunker . Schmitt-Nilson . Hirsch
(86) Internationale Anmeldenummer: EP0009002
(87) Internationale Veröffentlichungsnummer: WO01019754

(56) Entgegenhaltungen:
- DE-A- 2 006 522
- DE-U- 29 622 732
- US-A- 3 439 076
- PATENT ABSTRACTS OF JAPAN vol. 018, no. 679 (M-1728), 21. Dezember 1994 (1994-12-21) & JP 06 270111 A (MISAWA CERAMICS KK), 27. September 1994 (1994-09-27)
- PATENT ABSTRACTS OF JAPAN vol. 1996, no. 12, 26. Dezember 1996 (1996-12-26) & JP 08 208355 A (GEOSTR CORP), 13. August 1996 (1996-08-13)

## Beschreibung

Die vorliegende Erfindung betrifft ein Mehrschichtverbundmaterial, das mindestens eine Schicht aus zementgebundenem Kernbeton und mindestens eine Schicht aus polymergebundenem Vorsatzbeton aufweist, ein Verfahren zu seiner Herstellung, sowie aus dem Mehrschichtverbundmaterial hergestellte Formkörper.

Beton ist ein künstlicher Stein, der aus einem Gemisch von Zement, Betonzuschlag und Wasser, gegebenenfalls mit Betonzusatzmitteln und Betonzusatzstoffen, durch Erhärten entsteht. Die Aushärtung bewirkt das Bindemittel Zement, das mit Wasser unter Normalbedingungen abbindet, wobei aus dem breiigen Betongemisch ein fester Körper geformt wird. Als Betonzuschlag, Betonzusatzmittel und Betonzusatzstoffe kommen mineralische sowie auch nicht-mineralische Materialien bestimmter Größen (Kornabstufung) in Frage. Für zementgebundene Betone liegen jahrzehntelange Erkenntnisse und Erfahrungen über Materialmerkmale, Materialzusammensetzung, Materialherstellung, Materialformung sowie das Materialverhalten in frischem und ausgehärtetem Zustand vor. Das Zusammenspiel von Zementqualitäten, Zuschlägen und deren kornmäßige Abstufung, von Füllmaterialien und sonstigen Zusatzstoffen sowie von der Wasserzugabe ist bekannt.

Zementgebundener Beton findet als Baustoff Verwendung für beispielsweise Konstruktionsbauteile, hergestellt vor Ort oder in industrieller Produktion, für Betonfertigteile wie Betonrohre oder Betonschächte, für Fassadenelemente oder für Pflaster- und Plattenbelagselemente aus Beton, für begrünbare Befestigungselemente oder wasserdurchlässige Beläge.

Zementgebundener Beton besitzt jedoch eine Reihe von Nachteilen: beispielsweise neigt er zur Bildung von Ausblühungen (aus Calciumcarbonat) oder läßt Wasser in das Porengefüge eindringen. Für Pflaster- oder Plattenbeläge aus Beton, die im Außenbereich eingesetzt werden, bedeutet dies, daß bei Frost durch gefrierendes Wasser Risse gebildet werden, die im Laufe der Zeit zur Zerstörung der Elemente führen. Zur Beseitigung von Eis verwendetes Tausalz kann mit dem Schmelzwasser in die Platten eindringen und ihre Zerstörung beschleunigen. Durch die poröse Struktur der Oberflächen derartiger Beläge haften Verschmutzungen gut an, so daß die Einsatzmöglichkeiten in Bereichen, wo mit starker Anschmutzung zu rechnen ist, wie Warenumschlagsbereiche, Abfüllbereiche in der Industrie, Außenbereichsgastronomie, eingeschränkt sind.

Zur Verbesserung der Verarbeitungs- und Gebrauchseigenschaften von Beton wurden Materialien entwickelt, bei denen das übliche Bindemittel Zement ganz oder teilweise durch Bindemittel auf der Basis von Kunstharzen ersetzt ist, sogenannter Polymerbeton. Als Bindemittel geeignet sind beispielsweise Epoxyharzsysteme, Polyurethanharzsysteme und Polyesterharzsysteme.

Polymergebundener Beton weist gegenüber konventionellem zementgebundenem Beton eine Reihe von Vorteilen auf. Insbesondere ist er widerstandsfähiger gegen Chemikalien, neigt weniger zur Anhaftung von Verschmutzungen und zeigt keine Ausblühungen. Auch die mechanischen Eigenschaften von Polymerbeton sind grundsätzlich zufriedenstellend, wie die Schlankheit von aus diesen Betonen hergestellten Bauelementen, beispielsweise Polyesterbetonrinnen oder Polyesterbetonrohren, zeigt.

Polymergebundener Beton ist allerdings in der Herstellung wesentlich teurer als zementgebundener Beton. Daher ist man bestrebt, die verwendete Menge an Polymerbeton möglichst gering zu halten. Es ist aber auch möglich und völlig ausreichend, daß bei einem aus Beton gefertigten Formteil, beispielsweise einem Pflasterstein oder einer Fassadenplatte, nur die Oberseite aus Polymerbeton besteht.

Bekannt sind Verbundelemente, bei denen auf eine vorgefertigte Schicht aus zementgebundenem Beton eine ebenfalls vorgefertigte Schicht aus polymergebundenem Beton aufgeklebt ist. Diese Elemente sind nicht in einem Arbeitsgang herstellbar und erfordern kostspieligen. Spezialklebstoff.

Bekannt ist auch ein Pflasterstein als eine Verbundkonstruktion aus sogenanntem Kernbeton und Vorsatzbeton. Der Kernbeton ist zementgebundener Beton, und die darauf aufgebrachte Deckschicht, der Vorsatzbeton, ist polymergebundener Beton. Diese Verbundelemente werden beispielsweise hergestellt, indem zuerst die Zement als Bindemittel enthaltende Kernbetonmischung in einen Formkasten einer Steinformmaschine eingebracht, und dann die Polymer als Bindemittel enthaltende Vorsatzbetonmischung auf die Kernbetonmischung aufgebracht wird. Dabei ergibt sich ein Verbundelement mit einer Tragschicht aus zementgebundenem Kernbeton und einer üblicherweise relativ dünnen Deckschicht aus polymergebundenem Vorsatzbeton. Die Eigenschaften des Verbundelements werden im wesentlichen von der Deckschicht bestimmt, so daß nur der polymergebundene Vorsatzbeton die meisten der an das jeweilige Produkt gestellten Forderungen erfüllen muß .

Ein gravierender Nachteil bei den bekannten Plastersteinen aus Kernbeton und Vorsatzbeton liegt darin, daß die Verbindung zwischen Vorsatzbeton und Kembeton schwächer ist als die Bindung innerhalb der Kernbetonschicht bzw. innerhalb der Vorsatzbetonschicht. Außerdem haben die bekannten Vorsatzbetone eine porige Gefügestruktur, bei der die Verbindung der Zuschlagskörper oft nur in Punktform geschaffen wird, d.h., es werden häufig recht einkörnig gestufte Materialien in ihren Berührungspunkten miteinander verklebt. Diese porige Gefügestruktur erlaubt das Eindringen von Wasser und im Winter gegebenenfalls von salzigen Lösungen. Das eingedrungene Wasser kann gefrieren und zu Rissen in dem Material führen. Schlimmstenfalls kann die Vorsatzbetonschicht von der Kernbetonschicht abplatzen. Die Frost/Tau-Wechselbeständigkeit der bekannten Pflastersteine ist daher mangelhaft. Darüberhinaus ist die Abriebbeständigkeit der porigen polymergebundenen Vorsatzbetone schwach, da einzelne Zuschlagspartikel schnell aus dem Gefügeverband herausgerissen werden, wenn das Material stärkeren Belastungen ausgesetzt ist, beispielsweise durch Befahren.

Aufgabe der vorliegenden Erfindung ist es daher, ein Verbundmaterial aus zementgebundenem Kernbeton und polymergebundenem Vorsatzbeton bereitzustellen, das die vorgenannten Nachteile überwindet. Insbesondere soll das Verbundmaterial durch Temperaturwechsel induzierte Spannungen schadlos aufnehmen können und Frost/Tau-Wechselbeständigkeit besitzen.

Bevorzugt soll das Verbundmaterial auch statische und dynamische Belastungen wie "Einbaustreß" und Belastungen durch Begehen oder Befahren, aufnehmen können ohne Schaden zu nehmen. Bevorzugt soll das Verbundmaterial auch beständig gegen Licht, insbesondere UV-Licht, sein und, natürlich, auch die bei Polymerbeton gemäß dem Stand der Technik bekannten positiven Eigenschaften, wie Chemikalienbeständigkeit, besitzen.

Aufgabe der vorliegenden Erfindung ist es auch, Formkörper aus dem erfindungsgemäßen Verbundmaterial bereitzustellen. Derartige Formkörper können z.B. Betonfertigteile, Betonpflastersteine oder Betonplatten sein.

Eine weitere Aufgabe der Erfindung ist es, ein Verfahren zur Herstellung eines Verbundmaterials aus zementgebundenem Kernbeton und polymergebundenem Vorsatzbeton bereitzustellen. Das Verfahren soll vollständig auf konventionellen Fertigungslinien für zementgebundenen Beton durchführbar sein, ohne daß maschinentechnisch aufwendige Anpassungsmaßnahmen erforderlich sind. Eine erhöhte Beanspruchung der Produktionseinrichtungen soll vermieden werden.

Die Aufgabe wird gelöst durch das Mehrschichtverbundmaterial aufweisend mindestens eine Schicht aus einem zementgebundenen Beton, mindestens eine Schicht aus einem polymergebundenen Beton und einen Übergang zwischen benachbarten Schichten aus zementgebundenem Beton und aus polymergebundenem Beton, dadurch gekennzeichnet, daß der Übergang mindestens die Materialfestigkeit der weniger stabilen der benachbarten Schichten besitzt, die Schicht aus polymergebundenem Beton eine Gefügestruktur besitzt, die das Durchleiten von flüssigem Wasser zu dem Übergang verhindert, aber das Entweichen von Wasser, vorzugsweise nur von dampfförmigem Wasser, aus dem Material erlaubt, und daß die Schicht aus polymergebundenem Beton aus Betonzuschlag, gewünschtenfalls Betonzusatzmitteln und/oder Betonzusatzstoffen, und mindestens einem Polymer aufgebaut ist, wobei das mindestens eine Polymer oder die Komponenten des Polymers im nicht ausgehärteten Zustand in Wasser dispergiert ist (sind) und beim Aushärten des Polymers wasser frei wird.

Das erfindungsgemäße Verfahren zur Herstellung des Mehrschichtverbundmaterials mit mindestens einer Schicht aus zementgebundenem Beton, mindestens einer Schicht aus polymergebundenem Beton und einem Übergang zwischen benachbarten Schichten aus zementgebundenem Beton und aus polymergebundenem Beton, ist dadurch gekennzeichnet, daß mindestens eine Zement als Bindemittel enthaltende Betonmischung hergestellt wird, mindestens eine Polymer als Bindemittel enthaltende Betonmischung hergestellt wird, wobei das Polymer oder die Komponenten des Polymers im nicht ausgehärteten Zustand in Wasser dispergiert ist (sind) und beim Aushärten des Polymers wasser frei wird, die Betonmischungen getrennt zugeführt und zur Ausbildung mindestens einer Schicht aus polymergebundenem Beton auf mindestens einer Schicht aus zementgebundenem Beton direkt aufeinander aufgebracht werden, wobei die Zement als Bindemittel enthaltende Betonmischung zumindest an dem Übergang zwischen benachbarten Schichten aus zementgebundener Betonmischung und polymergebundener Betonmischung weniger Wasser als die zum Abbinden erforderliche Wassermenge enthält.

Unter einem "im nicht ausgehärteten Zustand in Wasser dispergierten Polymer" sind hierin auch in Wasser dispergierte Polymervorprodukte oder -Komponenten zu verstehen, beispielsweise oligomere oder polymere Verbindungen, die in Wasser dispergiert sind und unter Vernetzung oder weiterer Polymerisation und Vernetzung reagieren können. Diese Polymere oder Polymerkomponenten bilden nach dem Aushärten das Bindemittel für den polymergebundenen Beton.

Der aus dem Mehrschichtverbundmaterial hergestellte erfindungsgemäße Formkörper ist an mindestens einer Fläche mit mindestens einer Schicht aus polymergebundenem Beton ausgestattet.

In den Zeichnungen zeigen:
- Fig. 1: eine Betonplatte aus erfindungsgemäßem Mehrschichtverbundmaterial im Querschnitt;
- Fig. 2: einen Bordstein aus erfindungsgemäßem Mehrschichtverbundmaterial im Querschnitt;
- Fig. 3: eine Betonplatte aus erfindungsgemäßem Mehrschichtverbundmaterial mit einer Kernbetonschicht, einer Vorsatzbetonschicht und einer Polymer-Deckschicht, im Querschnitt;
- Fig. 4: einen Poller aus erfindungsgemäßem Mehrschichtverbundmaterial im Querschnitt.

Das erfindungsgemäße Mehrschichtverbundmaterial weist mindestens eine Schicht aus zementgebundenem Beton, nämlich die Kernbetonschicht, und mindestens eine Schicht aus polymergebundenem Beton, nämlich die Vorsatzbetonschicht, auf. Das erfindungsgemäße Mehrschichtverbundmaterial ist dadurch gekennzeichnet, daß der Übergang zwischen der Kernbetonschicht und der Polymerbetonschicht mindestens die Materialfestigkeit der weniger stabilen der angrenzenden Schichten besitzt und daß die Vorsatzbetonschicht eine Gefügestruktur besitzt, die das Durchleiten von flüssigem Wasser zu dem Übergang verhindert, bevorzugt das Eindringen von flüssigem Wasser weitgehend verhindert, aber das Entweichen von in der Vorsatzbetonschicht vorhandenem Wasser oder das Durchdiffundieren von aus dem Kernbeton kommenden Wasser erlaubt. Das Wasser entweicht gasförmig, das heißt in Form von Wasserdampf.

Das erfindungsgemäße Verfahren zur Herstellung des Mehrschichtverbundmaterials weist folgende Schritte auf: es werden mindestens eine Zement als Bindemittel enthaltende Betonmischung und mindestens eine Polymer als Bindemittel enthaltende Betonmischung getrennt voneinander hergestellt und dann dergestalt einander zugeführt, daß eine Schichtstruktur mit mindestens zwei Schichten, d. h. mindestens einer Schicht aus zementgebundenem Beton und mindestens einer Schicht aus polymergebundenem Beton, ausgebildet wird. Bei einer derartigen Schichtung entsteht ein Übergangsbereich zwischen einer Schicht aus zementgebundenem Beton und einer Schicht aus polymergebundenem Beton. Dieser Übergang zwischen Schichten mit unterschiedlichem Bindemittel stellt bei konventionellen Pflastersteinen eine Schwachstelle dar. Die Festigkeit der Bindung zwischen dem polymergebundenem Vorsatzbeton und dem zementgebundenem Kernbeton ist oft geringer als die Festigkeit der Bindung innerhalb der Schicht aus polymergebundenem Vorsatzbeton bzw. innerhalb der Schicht aus zementgebundenem Kernbeton, vor allem bei einer Herstellung des Formkörpers in nur einem Arbeitsgang. Erfindungsgemäß wird dieses Problem dadurch gelöst, daß der Zement als Bindemittel enthaltenden Betonmischung weniger Wasser zugegeben wird, als zum vollständigen Abbinden erforderlich wäre. Bei einer dickeren Kernbetonschicht ist es ausreichend, daß dieser Wasserunterschuß in dem an die Vorsatzbetonschicht angrenzenden Bereich gegeben ist. Beim Aushärten des Polymers in der Vorsatzbetonschicht wird Wasser frei. Dieses Wasser überwindet die Grenzfläche zur Kernbetonschicht und ermöglicht das vollständige Abbinden des zementgebundenen Betons. Außerdem wird in dem Wasser dispergiertes Polymer oder dispergierte Polymerbestandsteile in den an die Vorsatzbetonschicht angrenzenden Bereich der Kernbetonschicht eingeschleppt, so daß am Übergang zwischen diesen beiden Schichten eine Polymer/Zement-Mischmatrix vorliegt. Dadurch wird in dem Kontaktbereich eine Verbindung geschaffen, die mindestens die Materialfestigkeit des weniger stabilen der angrenzenden Betone erreicht, und überraschenderweise erreicht oder übertrifft die Festigkeit der Verbindung meist sogar die Materialfestigkeit des stabileren der angrenzenden Betone. Durch diese Abstimmung der Wasserhaushalte von benachbarter zementgebundener Betonschicht und polymergebundener Betonschicht aufeinander wird ein Bruch in dem Übergang oder der Kontaktschicht zuverlässig vermieden. Tatsächlich tritt bei Belastung auf Zug senkrecht zu den Schichten kein Riß am Übergang auf, sondern in der Regel reißt der Kernbeton.

Das Verfahren wird vollständig im wässrigen System ausgeführt, d.h., die unausgehärteten Materialien liegen alle in einer wässrigen Phase vor.

Daher können bei der Herstellung des erfindungsgemäßen Mehrschichtverbundmaterials gängige Fertigungsprozesse, wie sie zur Herstellung von zementgebundenem Beton üblich sind (Brettfertiger oder Plattenpresse), zum Einsatz kommen. Auf die Verwendung organischer Lösungsmittel kann verzichtet werden.

Formkörper aus zementgebundenem Beton werden typischerweise hergestellt durch Zusammenmischen der Bestandteile Zement, Betonzuschlag, Wasser und gegebenenfalls weiterer Bestandteile wie z.B. Betonzusatzstoffe oder Betonzusatzmittel, in einem Mischbehälter. Der Frischbeton wird zur Formmaschine transportiert, in eine Form eingebracht, nach dem Formen entschalt, und der so entstandene Formkörper im "Grünzustand" wird zunächst zu einem Lagerplatz weitertransportiert, wo er aushärten kann.

Erfindungsgemäße Formkörper werden völlig analog hergestellt, nur daß nicht nur ein, sondern mindestens zwei Betone hergestellt werden, wovon einer statt Zement ein Polymer oder Polymer bildende Komponenten als Bindemittel enthält. Die Einzelbetone werden in getrennten Mischbehältern hergestellt und getrennt zur Steinformmaschine transportiert. Diese besitzt mindestens zwei Zuführstationen, nämlich für die Kernbetonmischung und die Vorsatzbetonmischung. Nach Bedienung dieser Zuführstationen mit Material verarbeitet die Steinformmaschine die Materialien durch geeignete Volumensteuerung, indem sie die verschiedenen Betonarten in verschiedene übereinander angeordnete Betonnester einbringt, wobei das obere Betonnest durch Auffüllen des unteren Betonnests entsteht und wobei der Kernbeton in der Regel den unteren größeren Raum einnimmt und der Vorsatzbeton, der direkt auf dem Kernbeton aufgebracht wird, eine vergleichsweise dünne Deckschicht, bevorzugt etwa 5 - 30 % der Gesamtdicke des Formkörpers, ausbildet. Die Oberfläche der Vorsatzbetonschicht stellt die Oberfläche des Formkörpers dar. Anschließend wird der Formkörper wie gewohnt entschalt und zum Aushärten zu einem dafür vorgesehenen Lagerplatz transportiert. Die gesamte Fertigungslinie ist verfahrenskonsistent wässrig orientiert.

Eine besonders gute Verbindung zwischen den Schichten wird erzielt, wenn die Materialien in der Steinformmaschine verdichtet werden, wie dies auch bei Formkörpern, die ausschließlich aus zementgebundenem Beton bestehen, häufig durchgeführt wird. Die Verdichtung ist jedoch nicht zwingend. Wenn beispielsweise große zusammenhängende Flächen, wie ein Flachdach, aus dem erfindungsgemäßen Mehrschichtverbundmaterial hergestellt werden sollen, kann die Polymerbetonschicht einfach auf den noch feuchten, nicht ausgehärteten Kernbeton aufgebracht, zum Beispiel aufgespritzt und dann verteilt werden.

Formkörper aus dem erfindungsgemäßen Verbundmaterial können an einer oder an mehreren Außenflächen mit einer Polymerbeton-Vorsatzschicht ausgestattet sein. Die Schichten können parallel zueinander verlaufen oder jede andere beliebige Form aufweisen. Bei einem Bordstein beispielsweise empfiehlt es sich, die nach dem Einbau außenliegenden Flächen mit Polymerbeton zu beschichten. Die Beschichtung wird typischerweise so durchgeführt, daß in einem Formkasten ein Formkörper aus Kernbeton hergestellt und verdichtet wird und der nach dem Verdichten verbleibende Raum mit Polymerbeton ausgegossen wird. Danach wird wie üblich entschalt.

Wenn sehr dicke Kernbetonschichten erforderlich sind, beispielsweise bei tragenden Elementen oder stark beanspruchten Elementen, kann es vorteilhaft sein, die Kernbetonschicht als Doppelschicht auszubilden. In diesem Fall werden bevorzugt zwei verschiedene Kernbetonmischungen hergestellt, wobei eine Kernbetonmischung die zum Abbinden erforderliche Menge Wasser enthält. Diese Kernbetonmischung wird zur Herstellung der untersten Schicht des Mehrschichtverbundmaterials verwendet. Direkt auf diese Schicht im noch frischen Zustand wird die zum vollständigen Abbinden "zu trockene" Kernbetonmischung aufgebracht. Auf diese Schicht wiederum wird die Polymerbetonschicht aufgebracht.

Auch die Polymerbetonschicht kann gewünschtenfalls aus mehreren Schichten Polymerbeton mit unterschiedlicher Zusammensetzung aufgebaut werden. Dies kann vorteilhaft sein, wenn beispielsweise eine bestimmte Oberflächenstruktur oder -beschaffenheit erzielt werden soll, für die sehr teure Materialien aufgewendet werden müssen.

Die Schicht oder die Schichten aus Kernbeton wird (werden) aus konventionellem zementgebundenem Beton hergestellt. Die Materialzusammensetzung wird, wie es auf diesem Gebiet wohlbekannt ist, je nach beabsichtigtem Verwendungszweck gewählt. Der erfindungsgemäße zementgebundene Beton unterscheidet sich von zementgebundenen Betonen des Stands der Technik lediglich insofern, als der zur Verbindung mit dem polymergebundenen Beton vorgesehene Bereich weniger als die zum vollständigen Abbinden erforderliche Wassermenge enthält.

Der Vorsatzbeton enthält anstelle von Zement polymerbildende Komponenten oder ein Polymer oder eine Mischung verschiedener Polymere als Bindemittel. Das Bindemittel oder die polymerbildenden Komponenten ist (sind) in Wasser dispergiert, bevorzugt emulgiert. Bevorzugt ist ein Verhältnis von Polymer zu Wasser im Bereich von 1:0,7 bis 0,7:1, besonders bevorzugt 1:1. Ein höherer Anteil an Wasser ist insofern ungünstig, als er den Beton verwässern würde. Das Polymer sollte nicht zu schnell aushärten, um eine problemlose Verarbeitung zu erlauben. Die Aushärtung des polymeren Bindemittels darf aber auch nicht zu viel Zeit in Anspruch nehmen, d.h., das Polymer sollte die Hauptmenge an Wasser bevorzugt innerhalb von ca. 30 bis 90 Minuten abspalten. Wasser, das nicht während der Flüssigphase abgespalten werden kann, kann sich zum Teil an die Polymermatrix, die sich während des Aushärtens in dem Vorsatzbeton bildet, anlagern, d.h. fest gebunden werden, und zum Teil kann es in Dampfform aus dem Vorsatzbeton entweichen.

Bevorzugt findet ein polymeres Bindemittel Anwendung, das im ausgehärteten Zustand eine hohe Affinität zu oxidischen Oberflächen besitzt, damit die Zuschläge und sonstigen Betonzusätze zuverlässig und dauerhaft haftend gebunden werden und sich bei mechanischer Beanspruchung des Materials nicht aus dem Polymerbeton lösen können.

Als polymeres Bindemittel geeignet sind in Wasser emulgierbare oder suspendierbare Polymere wie Reaktionsharze, z.B. Epoxidharze, Methacrylatharze, ungesättigte Polyesterharze, Isocyanatharze und Phenacrylatharze. Wenn die Polymere als Zwei-Komponenten-Harzsysteme vorliegen, können Systeme aus Mischungen von nur unter Anwendungsbedingungen reaktiven Bestandteilen Anwendung finden, z.B. flüssige Epoxidharze mit darin dispergierten eingekapselten Aminen. Es können auch Systeme eingesetzt werden, bei denen Monomer/Oligomer und Härter miteinander zu reagieren beginnen, sobald sie zusammengebracht werden. In diesem Fall kann es bei einer sehr raschen Reaktion vorteilhaft sein, Polymerbeton-Vormischungen herzustellen, wobei eine Vormischung nur die Monomer/Oligomer-Komponente und die andere Vormischung nur die Härter-Komponente enthält. Die beiden Vormischungen werden dann unmittelbar vor dem Aufbringen auf die Kernbetonschicht miteinander vermischt.

Ein bevorzugtes Harzsystem ist ein Polyamin-Epoxyharzaddukt und ein Gemisch aus Bisphenol-A-Epichlorhydrin-Harz, p-tert.-Butylphenylglycidylether und Benzylalkohol.

Zur Herstellung des polymergebundenen Betons wird das Polymer oder eine Polymermischung oder die polymerbildenden Komponenten in Wasser emulgiert oder suspendiert, bevorzugt im Verhältnis 1:1, und mit dem Betonzuschlag vermischt. Gewünschtenfalls können weitere übliche Festkörper beigemischt werden, wie Betonzusatzmittel, Betonzusatzstoffe, Füllstoffe, Farbstoffe. Falls das Polymer selbst nicht ausreichend UV-stabil ist, empfiehlt es sich, UV-Stabilisatoren beizumischen.

Die Korngrößen des Zuschlags und der sonstigen Zusätze sollten so gewählt werden, daß sich zum einen eine möglichst große Klebefläche mit der Harzmatrix ergibt und zu anderen eine dichte Gefügestruktur entsteht. Das Gesamtkapillarporenvolumen der Schicht aus polymergebundenem Vorsatzbeton beträgt bevorzugt nicht mehr als 6 Vol-%, besonders bevorzugt nicht mehr als 4 Vol.-%. Besonders bevorzugt sind im wesentlichen nur Luftporen vorhanden. Die dichte Gefügestruktur mit im wesentlichen nur Luftporen bewirkt, daß die Vorsatzbetonschicht wie eine einseitig richtende Membran wirkt, d.h., das Eindringen von flüssigem Wasser von außen her in den Vorsatzbeton wird weitgehend verhindert, während das bereits in dem Vorsatzbeton vorhandene Wasser, z.B. Wasser aus der Herstellung des Polymerbetons, überschüssiges Wasser aus der Polymerisationsreaktion, das weder zum Abbinden des Kernbetons verbraucht, noch in der Polymermatrix gebunden wird, dampfförmig entweichen kann. Sollte der Kembeton hingegen Wasser aufgenommen haben, z.B. durch Einbau als Pflasterstein, kann der innere Dampfdruck von der anderen Schicht unbeschadet aufgenommen werden und langsam wieder nach außen abgegeben werden, ohne daß es zu einem Abplatzen der Vorsatzschicht von der Tragschicht kommt. Das erfindungsgemäße Mehrschichtverbundmaterial ist daher insbesondere hervorragend geeignet für alle Verwendungszwecke, bei denen das Material mechanischen Belastungen in Verbindung mit Nässeeinwirkung ausgesetzt wird. Auch Nässeeinwirkung in Verbindung mit häufigen Frost/Tau-Temperaturwechseln hält das erfindungsgemäße Mehrschichtverbundmaterial hervorragend stand, da zum einen wenig oder kein Wasser in die Polymerbeton-Vorsatzschicht eindringen kann und zum anderen etwa doch eingedrungenes Wasser problemlos dampfförmig wieder entweichen kann.

Auf die Polymerbeton-Vorsatzschicht kann noch eine weitere, mit dem Material der Vorsatzschicht verträgliche, Polymerschicht aufgebracht werden, beispielsweise wenn eine besonders glatte Oberflächenstruktur oder eine zusätzliche Versiegelung gewünscht wird. Als das Material der zusätzlichen Deckschicht kann dasselbe Polymer oder Polymergemisch Verwendung finden, das in der Polymerbeton-Vorsatzschicht als Bindemittel dient, es kann aber auch ein beliebiges anderes, mit dem Material der Vorsatzschicht verträgliches Polymer verwendet werden. Das Aufbringen der zusätzlichen Deckschicht kann zu einem im wesentlichen beliebigen Zeitpunkt erfolgen, d.h. vor dem Aushärten, während des Aushärtungsvorgangs oder auch nach dem Aushärten des Mehrschichtverbundmaterials. Die Art des Aufbringens hängt von dem verwendeten Polymer ab. Beispielsweise kann das Polymer in Wasser oder einem Lösungsmittel gelöst oder dispergiert werden und dann aufgespritzt oder aufgestrichen werden. Die zusätzliche Deckschicht kann ausschließlich aus polymerem Material bestehen, es kann aber auch ein gefülltes Polymer verwendet werden, d.h. die Polymer-Deckschicht kann übliche Füllstoffe enthalten.

Alternativ zum bisher Beschriebenen kann man bei mehreren Vorsatzbetonschichten das Mehrschichtverbundmaterial so ausbilden, daß nur die oberste Schicht eine Gefügestruktur besitzt, die das Durchleiten von flüssigem Wasser verhindert, die darunter liegende(n) Vorsatzbetonschicht(en) jedoch auch flüssiges Wasser passieren lassen.

Nachfolgend werden bevorzugte Ausführungsformen des erfindungsgemäßen Mehrschichtverbundmaterials an daraus hergestellten Formkörpern näher erläutert:

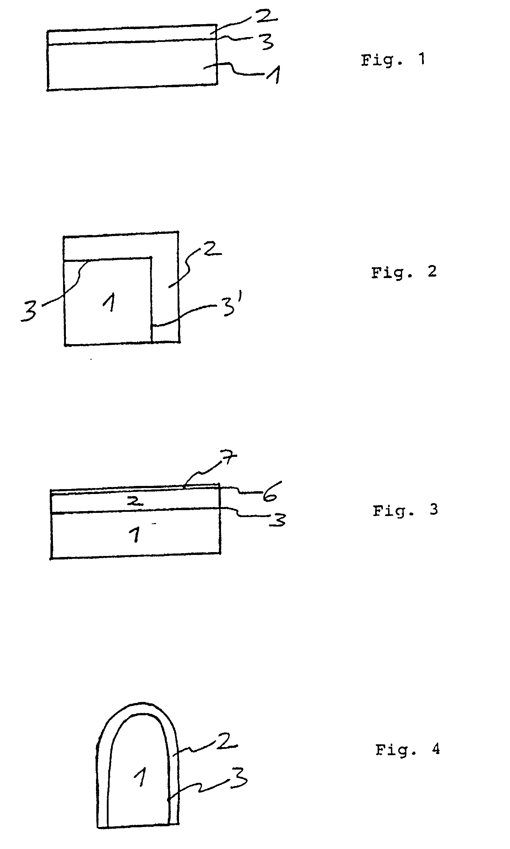

Fig. 1 zeigt eine Betonplatte aus erfindungsgemäßem Verbundmaterial im Querschnitt. Die Betonplatte besteht aus einer tragenden Kernbetonschicht 1 aus zementgebundenem Beton und einer Deckschicht aus polymergebundenem Beton, nämlich der Vorsatzbetonschicht 2. Die Kernbetonschicht 1 weist zumindest in dem an die Vorsatzbetonschicht 2 angrenzenden Bereich einen Wasserunterschuß auf, d.h., sie enthält weniger als die zum vollständigen Abbinden erforderliche Menge Wasser. Dieser Wasserunterschuß wird ausgeglichen durch Wasser aus der Vorsatzbetonschicht 2, das unter Mitnahme von darin dispergiertem Polymer oder Polymerbestandteilen in die Kernbetonschicht 1 eindiffundiert, wobei am Übergang 3 zwischen Kembetonschicht und Vorsatzbetonschicht eine dauerhafte Verbindung ausgebildet wird.
   Derartige Platten oder andere erfindungsgemäße Formkörper können auch mehrere übereinanderliegende Kernbetonschichten und/oder mehrere übereinanderliegende Vorsatzbetonschichten aufweisen. Bei Formkörpern mit mehreren Kernbetonschichten ist es ausreichend, wenn die mit der Vorsatzbetonschicht direkt in Kontakt stehende Kernbetonschicht einen Wasserunterschuß aufweist. Wenn mehrere Vorsatzbetonschichten aufgebracht werden, können diese unterschiedliche Polymere als Bindemittel und/oder unterschiedliche Gefügedichten besitzen.
Fig. 2 zeigt einen Bordstein im Querschnitt. Den tragenden Teil des Bordsteins bildet die Kernbetonschicht 1 aus konventionellem zementgebundenen Beton. An zwei Seiten, den nach dem Einbau des Bordsteins außenliegenden Seiten, ist die Kernbetonschicht mit einer Vorsatzbetonschicht aus Polymerbeton ausgestattet, wobei die Übergänge 3 und 3' zwischen Kernbeton und Vorsatzbeton für eine beständige Verbindung zwischen den beiden Betonschichten sorgen.
Fig. 3 zeigt, im Querschnitt, einen Formkörper aus erfindungsgemäßem Mehrschichtverbundmaterial, bei dem an der Oberfläche 6 der Vorsatzbetonschicht 2 eine dünne Schicht oder ein Film 7 auf der Basis von Polymeren vorgesehen ist. Die Polymerschicht 7 kann als Schutz oder Versiegelung für die Vorsatzbetonschicht dienen. Sie kann Füllstoffe enthalten und der Oberfläche des Mehrschichtverbundmaterials besondere optische Effekte verleihen.
Fig. 4 zeigt einen Poller im Querschnitt. Auf dem Kernbeton 1 ist, den Kernbeton umgebend, eine weichere, und damit verletzungsmindernde Vorsatzbetonschicht 2 aufgebracht. Aus Fig. 4 ist ersichtlich, daß der Übergang 3 zwischen den Schichten mit unterschiedlichem Bindemittel nicht eben sein muß, sondern grundsätzlich jede beliebige Form annehmen kann.

Das erfindungsgemäße Mehrschichtverbundmaterial ist nicht nur für einzelne Formkörper verwendbar, sondern auch für großflächige Anwendung geeignet. Anwendungsbeispiele sind Betonflachdächer mit einer außenliegenden Polymerbetonschicht als Nässeversiegelung oder Wände, z. B. Kellerwände, die außen mit einer Polymerbetonschicht abgedichtet sind. Die Polymerbetonschicht mit der erfindungsgemäßen Gefügestruktur verhindert zwar das Eindringen von Wasser von außen her in die Wände, erlaubt jedoch die Diffusion von Wasserdampf, d.h. die Wände können "atmen".

Wie vorstehend ausgeführt, besitzt das erfindungsgemäße Mehrschichtverbundmaterial eine Reihe von Vorteilen: da vollständig im wässrigen System gearbeitet wird, können konventionelle Fertigungstechniken angewendet werden. Das Mehrschichtverbundmaterial ist preiswert herzustellen, da der Polymerbeton nur in einer geringen Menge verwendet werden muß. Gleichzeitig werden jedoch die Oberflächeneigenschaften des Verbundmaterials durch die Deckschicht aus Polymerbeton bestimmt. Die Verbindung zwischen Kernbeton und Polymerbeton ist dauerhaft, auch wenn das Verbundmaterial starken statischen oder dynamischen Belastungen, Spannungen durch Temperaturwechsel oder starker Nässe ausgesetzt ist. Das Verbundmaterial ist witterungsbeständig, druck- und abriebfest. Außerdem besitzt das Verbundmaterial aufgrund seiner Polymerbeton-Deckschicht erhöhte Chemikalienbeständigkeit und Beständigkeit gegen Schmutzanhaftung und erlaubt die Gestaltung interessanter Oberflächendekore.

## Patentansprüche

1. Mehrschichtverbundmaterial aufweisend mindestens eine Schicht aus einem zementgebundenen Beton (1), mindestens eine Schicht aus einem polymergebundenen Beton (2) und einen Übergang (3) zwischen benachbarten Schichten aus zementgebundenem Beton und aus polymergebundenem Beton,
**dadurch gekennzeichnet,**
**daß** der Übergang (3) mindestens die Materialfestigkeit der weniger stabilen der benachbarten Schichten (1, 2) besitzt,
die Schicht aus polymergebundenem Beton (2) eine Gefügestruktur besitzt, die das Durchleiten von flüssigem Wasser zu dem Übergang (3) verhindert, aber das Entweichen von Wasser aus dem Material erlaubt und
**daß** die Schicht aus polymergebundenem Beton (2) aus Betonzuschlag, gewünschtenfalls Betonzusatzmitteln und/oder Betonzusatzstoffen, und mindestens einem Polymer aufgebaut ist, wobei das mindestens eine Polymer oder die Komponenten des Polymers im nicht ausgehärteten Zustand in Wasser dispergiert ist (sind) und beim Aushärten des Polymers wasser frei wird.

2. Mehrschichtverbundmaterial nach Anspruch 1,
**dadurch gekennzeichnet,**
**daß** die Schicht aus polymergebundenem Beton (2) eine Gefügestruktur besitzt, die das Eindringen von flüssigem Wasser in eine Tiefe von mehr als der halben Dicke der Schicht aus polymergebundenem Beton verhindert, aber das Entweichen von Wasser aus dem Material erlaubt.

3. Mehrschichtverbundmaterial nach Anspruch 1 oder 2,
**dadurch gekennzeichnet,**
**daß** die Schicht aus polymergebundenem Beton (2) eine Gefügestruktur besitzt, die das Eindringen von flüssigem Wasser verhindert, aber das Entweichen von Wasser aus dem Material erlaubt.

4. Mehrschichtverbundmaterial nach einem der Ansprüche 1 bis 3,
**dadurch gekennzeichnet,**
**daß** es an der Außenoberfläche (6) der mindestens einen Schicht aus polymergebundenem Beton (2) eine Polymerschicht (7) aufweist.

5. Mehrschichtverbundmaterial nach einem der Ansprüche 1 bis 4,
**dadurch gekennzeichnet,**
**daß** das Polymer in Wasser im Verhältnis 1:0,7 bis 0,7:1, bevorzugt 1:1, dispergierbar ist.

6. Mehrschichtverbundmaterial nach einem der Ansprüche 1 bis 5,
**dadurch gekennzeichnet,**
**daß** das Gesamtkapillarporenvolumen der Schicht aus polymergebundenen Beton (2) nicht mehr als 6 Vol-% beträgt.

7. Mehrschichtverbundmaterial nach Anspruch 6,
**dadurch gekennzeichnet,**
**daß** die Schicht aus polymergebundenem Beton (2) im wesentlichen kapillarporenfrei ist.

8. Mehrschichtverbundmaterial nach einem der Ansprüche 1 bis 7,
**dadurch gekennzeichnet,**
**daß** der Volumenanteil des mindestens einen Polymers in der Schicht aus polymergebundenem Beton (2) 4 bis 14 %, bevorzugt 8 bis 13 % beträgt.

9. Mehrschichtverbundmaterial nach einem der Ansprüche 1 bis 8,
**dadurch gekennzeichnet,**
**daß** die Schicht aus zementgebundenem Beton (1) und/oder die Schicht aus polymergebundenem Beton (2) aus mindestens zwei Schichten (1, 1'; 2, 2') unterschiedlicher Zusammensetzung aufgebaut ist (sind).

10. Mehrschichtverbundmaterial nach einem der Ansprüche 1 bis 9,
**dadurch gekennzeichnet,**
**daß** es ein Formkörper ist, der an mindestens einer Fläche mit mindestens einer Schicht aus polymergebundenem Beton ausgestattet ist.

11. Mehrschichtverbundmaterial nach Anspruch 10,
**dadurch gekennzeichnet,**
**daß** der Formkörper ein Betonfertigteil, ein Fassadenbauelement, ein Bordstein, ein Pflasterstein, eine Wege- oder Terrassenplatte, ein Rohr oder eine Rinne ist.

12. Verfahren zur Herstellung eines Mehrschichtverbundmaterials mit mindestens einer Schicht aus zementgebundenem Beton (1), mindestens einer Schicht aus polymergebundenem Beton (2) und einem Übergang (3) zwischen benachbarten Schichten aus zementgebundenem Beton und aus polymergebundenem Beton,
**dadurch gekennzeichnet,**
**daß**
- mindestens eine Zement als Bindemittel enthaltende Betonmischung hergestellt wird,
- mindestens eine Polymer als Bindemittel enthaltende Betonmischung hergestellt wird, wobei das Polymer oder die Komponenten des Polymers im nicht ausgehärteten Zustand in Wasser dispergiert ist (sind) und beim Aushärten des Polymers Wasser frei wird,
- die Betonmischungen getrennt zugeführt und zur Ausbildung mindestens einer Schicht aus polymergebundenem Beton (2) auf mindestens einer Schicht aus zementgebundenem Beton (1) direkt aufeinander aufgebracht werden,
- wobei die Zement als Bindemittel enthaltende Betonmischung zumindest an dem Übergang (3) zwischen benachbarten Schichten aus zementgebundener Betonmischung und polymergebundener Betonmischung weniger Wasser als die zum Abbinden erforderliche Wassermenge enthält.

13. Verfahren nach Anspruch 12,
**dadurch gekennzeichnet,**
**daß** mindestens zwei Zement als Bindemittel enthaltende Betonmischungen und/oder mindestens zwei Polymer als Bindemittel enthaltende Betonmischungen hergestellt werden, die getrennt zugeführt und schichtförmig aufeinander aufgebracht werden.

14. Verfahren nach Anspruch 12 oder 13,
**dadurch gekennzeichnet,**
**daß** die Polymer als Bindemittel enthaltende Betonmischung hergestellt wird durch Mischen von Betonzuschlag mit mindestens einem Polymer, das in Wasser im Verhältnis 1:0,7 bis 0,7:1, bevorzugt 1:1, dispergiert ist.

15. Verfahren nach einem der Ansprüche 12 bis 14,
**dadurch gekennzeichnet,**
**daß** auf der Außenoberfläche (6) der mindestens einen Schicht aus polymergebundenem Beton (2) eine Polymerschicht (7) aufgebracht wird.

16. Verfahren nach einem der Ansprüche 12 bis 15,
**dadurch gekennzeichnet,**
**daß** der Polymer als Bindemittel enthaltenden Betonmischung eine derartige Menge an in Wasser dispergiertem Polymer zugegeben wird, daß sich nach dem Aushärten ein Polymervolumenanteil von 4 bis 14 % , bevorzugt 8 - 13 % , ergibt.

17. Verfahren nach einem der Ansprüche 12 bis 16,
**dadurch gekennzeichnet,**
**daß** nach dem Aufbringen der mindestens einen Polymer als Bindemittel enthaltenden Betonmischung auf die mindestens eine Zement als Bindemittel enthaltende Betonmischung der sich ergebende geformte Körper verdichtet wird.

18. Verfahren nach einem der Ansprüche 12 bis 17,
**dadurch gekennzeichnet,**
- **daß** mindestens eine Schicht aus einer Zement als Bindemittel enthaltenden Betonmischung in eine Form eingebracht wird,
- mindestens eine Schicht aus einer Polymer als Bindemittel enthaltenden Betonmischung darauf aufgebracht wird,
- die Schichten in der Form unter Ausbildung eines Formkörpers verdichtet werden,
- der Formkörper entschalt wird, und
- der entschalte Formkörper aushärten lassen wird.

## Claims

1. A multiple layer composite material comprising at least one layer of a cement-bound concrete (1), at least one layer of a polymer-bound concrete (2) and a transition (3) between adjacent layers of cement-bound concrete and polymer-bound concrete,
**characterized in**
**that** the transition (3) has at least the material strength of the less stable one of the adjacent layers (1, 2),
the layer of polymer-bound concrete (2) has a grain structure preventing the passage of liquid water to the transition (3), but permitting the escape of water from the material, and
**that** the layer of polymer-bound concrete (2) is composed of concrete aggregate, if desired concrete admixtures and/or concrete additives, and of at least one polymer, said at least one polymer or the components of the polymer, in the uncured state, being dispersed in water and water becoming free when the polymer cures.

2. A multiple layer composite material according to claim 1,
**characterized in that** the layer of polymer-bound concrete (2) has a grain structure that prevents the penetration of liquid water to a depth of more than half of the thickness of the layer of polymer-bound concrete, but permits the escape of water from the material.

3. A multiple layer composite material according to claim 1 or 2,
**characterized in that** the layer of polymer-bound concrete (2) has a grain structure that prevents the penetration of liquid water, but permits the escape of water from the material.

4. A multiple layer composite material according to any of claims 1 to 3,
**characterized in that** it has a polymer layer (7) on the outside surface (6) of the at least one layer of polymer-bound concrete (2).

5. A multiple layer composite material according to any of claims 1 to 4,
**characterized in that** the polymer is dispersible in water in a ratio of 1:0.7 to 0.7:1, preferably 1:1.

6. A multiple layer composite material according to any of claims 1 to 5,
**characterized in that** the total capillary pore volume of the layer of polymer-bound concrete (2) is not more than 6 % by volume.

7. A multiple layer composite material according to claim 6,
**characterized in that** the layer of polymer-bound concrete (2) is substantially free from capillary pores.

8. A multiple layer composite material according to any of claims 1 to 7,
**characterized in that** the volume percentage of the at least one polymer in the layer of polymer-bound concrete (2) is 4 to 14 %, preferably 8 to 13 %.

9. A multiple layer composite material according to any of claims 1 to 8,
**characterized in that** the layer of cement-bound concrete (1) and/or the layer of polymer-bound concrete (2) is (are) composed of at least two layers (1, 1'; 2, 2') of different compositions.

10. A multiple layer composite material according to any of claims 1 to 9,
**characterized in that** it is in the form of a shaped body which is provided on at least one surface thereof with at least one layer of polymer-bound concrete.

11. A multiple layer composite material according to claim 10,
**characterized in that** the shaped body is a ready-made concrete part, a cladding panel, a curbstone, a paving stone, a path or terrace slab, a pipe or a channel.

12. A method for producing a multiple layer composite material comprising at least one layer of cement-bound concrete (1), at least one layer of polymer-bound concrete (2) and a transition (3) between adjacent layers of cement-bound concrete and polymer-bound concrete,
**characterized by** the steps of:
- making at least one concrete mixture containing cement as binder,
- making at least one concrete mixture containing polymer as binder, with said polymer or the components of said polymer, in the uncured state, being dispersed in water and water becoming free when the polymer cures,
- supplying the concrete mixtures separately and applying them directly on each other so as to form at least one layer of polymer-bound concrete (2) on at least one layer of cement-bound concrete (1),
- with the concrete mixture containing cement as binder, at least at the transition (3) between adjacent layers of cement-bound concrete mixture and polymer-bound concrete mixture, containing less water than the amount of water necessary for setting.

13. A method according to claim 12,
**characterized in that** at least two concrete mixtures containing cement as binder and/or at least two concrete mixtures containing polymer as binder are made which are supplied separately and applied onto each other in layers.

14. A method according to claim 12 or 13,
**characterized in that** the concrete mixture containing polymer as binder is made by mixing concrete aggregate with at least one polymer dispersed in water in a ratio of 1:0,7 to 0.7:1, preferably 1:1.

15. A method according to any of claims 12 to 14,
**characterized in that** a polymer layer (7) is applied to the outside surface (6) of the at least one layer of polymer-bound concrete (2).

16. A method according to any of claims 12 to 15,
**characterized in that** the concrete mixture containing polymer as binder has added thereto such an amount of polymer dispersed in water that a polymer volume percentage of 4 to 14 %, preferably 8 to 13 %, results after curing.

17. A method according to any of claims 12 to 16,
**characterized in that**, after application of the at least one concrete mixture containing polymer as binder onto the at least one concrete mixture containing cement as binder, the resulting shaped body is compacted.

18. A method according to any of claims 12 to 18,
**characterized in**
- **that** at least one layer of a concrete mixture containing cement as binder is introduced into a mold,
- at least one layer of a concrete mixture containing polymer as binder is applied thereonto,
- the layers are compacted in the mold, forming a shaped body,
- the shaped body is unmolded, and
- the unmolded shaped body is allowed to cure.

## Revendications

1. Matériau composite multicouche présentant au moins une couche de béton lié à du ciment (1), au moins une couche de béton lié à un polymère (2) et une transition (3) entre deux couches voisines de béton lié à du ciment et de béton lié à un polymère,
**caractérisé en ce que**
la transition (3) présente au moins la solidité des couches voisines moins stables (1, 2) ,
la couche de béton lié à un polymère (2) présente une structure qui empêche l'entraînement de l'eau liquide vers la transition (3) mais qui permet l'écoulement de l'eau hors du matériau et
la couche de béton lié à un polymère (2) est constituée d'un agrégat, si on le souhaite d'adjuvants et/ou de produits d'addition du béton, et d'au moins un polymère, au moins un polymère ou les composants du polymère étant dispersé(s) dans l'eau à l'état non durci et de l'eau étant libérée lors du durcissement du polymère.

2. Matériau composite multicouche selon la revendication 1,
**caractérisé en ce que**
la couche de béton lié à un polymère (2) présente une structure qui empêche la pénétration d'eau liquide à une profondeur supérieure à la moitié de l'épaisseur de la couche de béton lié à un polymère, mais permet l'écoulement de l'eau hors du matériau.

3. Matériau composite multicouche selon la revendication 1 ou 2,
**caractérisé en ce que**
la couche de béton lié à un polymère (2) présente une structure qui empêche la pénétration d'eau liquide mais permet l'écoulement de l'eau hors du matériau.

4. Matériau composite multicouche selon l'une quelconque des revendications 1 à 3,
**caractérisé en ce qu'**
il présente une couche de polymère (7) à la surface extérieure (6) d'au moins une couche de béton lié à un polymère (2).

5. Matériau composite multicouche selon l'une quelconque des revendications 1 à 4,
**caractérisé en ce que**
le polymère peut se disperser dans l'eau dans un rapport de 1:0,7 à 0, 7:1, de préférence 1:1.

6. Matériau composite multicouche selon l'une quelconque des revendications 1 à 5,
**caractérisé en ce que**
le volume total de pores capillaires de la couche de béton lié à un polymère (2) ne dépasse pas 6 % en volume.

7. Matériau composite multicouche selon la revendication 6,
**caractérisé en ce que**
la couche de béton lié à un polymère (2) est essentiellement exempte de pores capillaires.

8. Matériau composite multicouche selon l'une quelconque des revendications 1 à 7,
**caractérisé en ce que**
la part de volume d'au moins le polymère dans la couche de béton lié à un polymère (2) est comprise entre 4 et 14 %, de préférence entre 8 et 13 %.

9. Matériau composite multicouche selon l'une quelconque des revendications 1 à 8,
**caractérisé en ce que**
la couche de béton lié à du ciment (1) et/ou la couche de béton lié à un polymère (2) est (sont) constituée(s) d'au moins deux couches (1, 1' ; 2, 2') de composition différente.

10. Matériau composite multicouche selon l'une quelconque des revendications 1 à 9,
**caractérisé en ce que**
c'est un corps moulé qui est pourvu, sur au moins une surface, d'au moins une couche de béton lié à un polymère.

11. Matériau composite multicouche selon revendication 10,
**caractérisé en ce que**
le corps moulé est un élément en béton préfabriqué, un élément de façade, une bordure, un pavé, une plaque d'allée ou de terrasse, un tube ou une gouttière.

12. Procédé de fabrication d'un matériau composite multicouche avec au moins une couche de béton lié à du ciment (1), au moins une couche de béton lié à un polymère (2) et une transition (3) entre des couches voisines de béton lié à du ciment et de béton lié à un polymère,
**caractérisé en ce qu'**
- on fabrique au moins un mélange de béton contenant du ciment en tant que liant,
- on fabrique au moins un mélange de béton contenant un polymère en tant que liant, le polymère ou les composants du polymère étant dispersé(s) dans de l'eau à l'état non durci et de l'eau étant libérée lors du durcissement du polymère,
- on achemine les mélanges de béton séparément et, pour la configuration, on applique directement l'une sur l'autre au moins une couche de béton lié à un polymère (2) et au moins une couche de béton lié à du ciment (1), et
- le mélange de béton contenant du ciment en tant que liant contient moins d'eau que la quantité d'eau nécessaire à la prise du béton, au moins au niveau de la transition (3) entre les couches voisines en mélange de béton lié à du ciment et de béton lié à un polymère.

13. Procédé selon la revendication 12,
**caractérisé en ce qu'**
on fabrique au moins deux mélanges de béton contenant du ciment en tant que liant et/ou au moins deux mélanges de béton contenant deux polymères en tant que liant, qui sont acheminés séparément et appliqués l'un sur l'autre sous forme de couches.

14. Procédé selon la revendication 12 ou 13,
**caractérisé en ce qu'**
on fabrique le mélange de béton contenant un polymère en tant que liant en mélangeant l'agrégat à au moins un polymère dispersé dans de l'eau dans un rapport de 1:0,7 à 0, 7:1, de préférence 1:1.

15. Procédé selon l'une quelconque des revendications 12 à 14,
**caractérisé en ce qu'**
on applique une couche de polymère (7) à la surface extérieure (6) d'au moins une couche de béton lié à un polymère (2).

16. Procédé selon l'une quelconque des revendications 12 à 15,
**caractérisé en ce qu'**
on ajoute au mélange de béton contenant un polymère en tant que liant une quantité de polymère dispersée dans de l'eau permettant d'obtenir un part de volume de polymère de 4 à 14 %, de préférence de 8 à 13 % après le durcissement.

17. Procédé selon l'une quelconque des revendications 12 à 16,
**caractérisé en ce qu'**
on compacte le corps moulé obtenu après l'application du mélange de béton contenant au moins un polymère en tant que liant sur le mélange de béton contenant au moins du ciment en tant que liant.

18. Procédé selon l'une quelconque des revendications 12 à 17,
**caractérisé en ce qu'**
- on introduit au moins une couche d'un mélange de béton contenant du ciment en tant que liant,
- on applique par-dessus au moins une couche d'un mélange de béton contenant un polymère en tant que liant,
- on compacte les couches dans le moule en formant un corps moulé,
- on décoffre le corps moulé et
- on laisse durcir le corps moulé décoffré.
